Europäisches Patentamt

European Patent Office

Office européen des brevets

(11) Publication number: **0 256 874**
A1

# (12) EUROPEAN PATENT APPLICATION

(21) Application number: **87307229.2**

(22) Date of filing: **14.08.87**

(51) Int. Cl.⁴: **B 67 D 3/02**
G 01 F 11/32

(30) Priority: **14.08.86 GB 8619844**

(43) Date of publication of application:
**24.02.88 Bulletin 88/08**

(84) Designated Contracting States:
**AT BE CH DE ES FR GB GR IT LI LU NL SE**

(71) Applicant: **M.K.R. Holdings Limited,
Cornwall Road Fairfield Industrial Estate,
South Wigston Leicester. LE8 2XH (GB)**

(72) Inventor: **Evatt, Michael Anthony Clifford
53, Ardington Road
Northampshire (GB)**

(74) Representative: **Lynd, Michael Arthur
MARKS & CLERK 57 Lincoln's Inn Fields
London WC2A 3LS (GB)**

(54) Liquid dispenser.

(57) A liquid dispenser for dispensing metered aliquots of liquid, which dispenser comprises a chamber having an inlet for liquid and an outlet for liquid, valve means axially movable within the chamber between a first position in which the outlet is sealed and the inlet is open and a second position in which the inlet is sealed and the outlet is open, and valve actuator means for actuating the said valve means, said valve actuator means including an actuator member movable generally parallel to the axis of movement of said valve means and biassing means biassing said valve means into said first position, said valve actuator means being adapted to move said valve means abruptly from said first to said second position upon actuating movement of said actuator member and to move said valve means abruptly from said second to said first position under the influence of the biassing means.

EP 0 256 874 A1

## Description

### LIQUID DISPENSER

This invention relates to a liquid dispenser, e.g. for dispensing metered aliquots of spirits from inverted bottles thereof.

Such dispensers are known and a popular range of such dispensers is availables sold under our British Registered Trade Mark No. 470373 "OPTIC".

According to the present invention there is provided a liquid dispenser for dispensing metered aliquots of liquid, which dispenser comprises a chamber having an inlet for liquid and an outlet for liquid, valve means axially movable within the chamber between a first position in which the outlet is sealed and the inlet is open and a second position in which the inlet is sealed and the outlet is open, and valve actuator means for actuating the said valve means, said valve actuator means including an actuator member movable generally parallel to the axis of movement of said valve means and biassing means biassing said valve means into said first position, said valve actuator means being adapted to move said valve means abruptly from said first to said second position upon actuating movement of said actuator member and to move said valve means abruptly from said second to said first position under the influence of the biassing means.

Preferably the valve actuator means includes a bistable resilient member capable of "flipping" through an over-centre position and in doing so arranged to cause said abrupt movement of the valve means in each direction. The bistable resilient member may be in the form of a metal leaf spring, e.g. a generally C-shaped or sinusoidal leaf spring.

It is preferred that progressive actuating movement of the actuator member causes progressive distortion of a said bistable resilient member, against the bias of the baissing means, until a point is reached at which the bistable resilient member flips over-centre and in doing so applies a sudden rotational force to one arm of a bell crank lever, to the other arm of which is attached the valve means, thereby to apply a sudden generally axial force to the valve member so as to move it from said first to said second position.

Preferably as many as possible of the components of the liquid dispenser of the present invention are plastics mouldings, those parts of which that constitute at least a front of the chamber (the "sight glass") being transparent so that a visual check may be made on the contents of the chamber.

Preferably said valve means comprises sealing means for sealing said valve means against the inlet and the outlet of the chamber, said sealing means being provided by any suitable material, such as silicone rubber.

A preferred embodiment of the present invention will now be described, by way of example only, with reference to the accompanying drawing in which:-

Fig.1 shows a front view of an embodiment of a liquid dispenser according to the present invention.

Fig.2 shows a partially sectional side view of the liquid dispenser of Fig.1.

Fig.3 shows a part of an actuating means of the liquid dispenser of Fig.1, in a first position.

Fig.4 shows the part of the actuating means of Fig.3, in a second position.

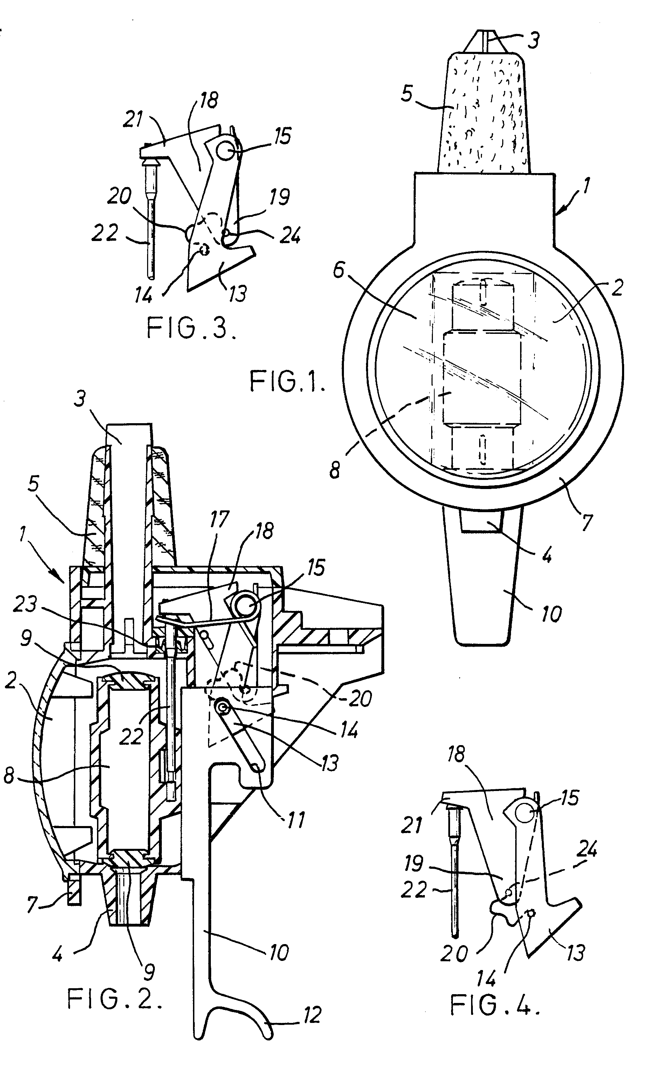

Referring to Figs 1 and 2, there is shown therein an embodiment of a liquid dispenser 1 of the present invention. The liquid dispenser 1 comprises a chamber 2 with an inlet 3 at its top and an outlet 4 at its base. A cork 5 is positioned around the top of the inlet 3. A sight glass 6 together with a sight glass surround 7 is attached to a front of the chamber 2. Inside the chamber 2 is a valve 8 having silicone rubber seals 9 at the top and at the bottom of the valve 8. The valve 8 is axially slidable between a first position, as shown in the Figs, in which the outlet 4 is sealed and the inlet 3 is open, and a second position (not shown) in which the outlet 4 is open and the inlet 3 is sealed.

An actuator member 10 is positioned behind the chamber 2 and is slidable, in an upward direction parallel to the direction of movement of the valve 8, from a first position to a second position. The actuator member 10 has two side walls at its top, a slot 11 being is formed in each side wall. The actuator member 10 includes a lip 12 at the bottom of the actuator member 10.

An intermediate lever 13 is operatively connected to the actuator member 10 by means of a pin 14, which pin 14 is attached to the intermediate lever 13 and is free to slide within the slot 11 in the actuator member 10. The intermediate lever 13 is rotatably attached, by a freely mounted pivot member 15 to the chamber 2 to a pivot point 16 at the top of the chamber 2. A spring 17 connected to the pivot point 16 biases the intermediate lever 13 into a first position.

A bell crank lever 18 is rotatably attached to the pivot member 15 on the intermediate lever 13. A first arm 19 of the bell crank lever 18 is connected by a leaf spring 20 to the intermediate lever 13. A second arm 21 of the bell crank lever 18 is attached to the top of an air valve shaft 22. The bottom of the air valve shaft 22 is attached to the valve 8. An air valve seal 23 is situated around the air valve shaft 22 at the point at which the air valve shaft 22 enters the chamber 2. Air is admitted into the chamber 2 upon actuation of the air valve shaft 22.

Referring to Fig. 3, there is shown therein a part of the actuating means of the liquid dispenser 1 of Fig. 1, in a first position. The leaf spring connects the first arm 19 of the bell crank lever 18 at an attachment point 24 to the pin 14 on the intermediate lever 13.

Referring to Fig.4, there is shown therein the part of the actuating means of Fig.3, in a second position. The intermediate lever 13 and the bell crank lever 18 are now in a position, wherein the air valve shaft 22 has moved upwards.

In use the liquid dispenser is fitted, using the cork 5 on the inlet 3, to a bottle. Said bottle is then inverted together with the liquid dispenser to an operating position and the chamber 2 fills with liquid from said bottle.

To move the valve 8 from a first position to a second position, to dispense a metered aliquot of liquid from the chamber 2, the actuator member 10 is moved upwards. The upward movement causes the intermediate lever 13 to rotate away from the chamber 2 due to the connection between the actuator member 10 and the intermediate lever 13, by the pin 14 in each slot 11. As the intermediate lever 13 rotates, the leaf spring 20 is distorted until a point is reached where the leaf spring 20 flips over-centre. This causes abrupt movement of the bell crank lever 19, causing the second arm 21 to rotate in an upward direction, whereupon the air valve shaft 22 moves upwards, which in turn causes the valve 8 to move abruptly upwards. As the air valve shaft 22 rises the air valve seal 23 opens and any liquid in the chamber 2 is dispensed. Upon release of the actuator member 10, the spring 17 biases the actuator means back to a first position and the chamber 2 fills up with more liquid.

When dispensing a sticky liquid, from e.g. a liqueur or spirit bottle, it is possible for the valve to become jammed as occurs with conventional liquid dispensers. It is very preferable that a pin be added to the bell crank lever to engage with the actuator member, when the actuator member is moved upwards. This allows a jammed valve to be forced free by manual operation, should the actuation caused by the leaf spring be too weak.

Because of the abrupt movement of the valve, caused by the valve actuator, only a negligible amount of liquid enters the chamber, due to run through, at the moment that both the inlet and the outlet to the chamber are open. Should the run through become intolerable, however, it is envisaged that a valve arrangement could be conceived, which upon actuation of the valve, seals the inlet before the outlet is opened, e.g. by the use of a telescopic valve arrangement.

To change the amount of liquid that may be dispensed, it is preferable to change the volume of the chamber by modifying the radius of curvature of the "sight glass". Using this technique a tolerance of plus or minus 0.7ml may be obtained for the volume of the chamber.

The body of the liquid dispenser is preferably made from SAN (styrene acrylonitrile), and typically the component parts are ultrasonically welded together. The valve actuator means are preferably made from acetal resin.

The inlet to the chamber preferably has a longitudinally extending internal dividing strip, to facilitate the dispensing of liquid from said bottle, by providing a convenient return route for air entering said bottle.

By means of the present invention a convenient liquid dispenser is provided.

## Claims

1. A liquid dispenser for dispensing metered aliquots of liquid, which dispenser comprises a chamber having an inlet for liquid and an outlet for liquid, valve means axially movable within the chamber between a first position in which the outlet is sealed and the inlet is open and a second position in which the inlet is sealed and the outlet is open, and valve actuator means for actuating the said valve means, said valve actuator means including an actuator member movable generally parallel to the axis of movement of said valve means and biassing means biassing said valve means into said first position, said valve actuator means being adapted to move said valve means abruptly from said first to said second position upon actuating movement of said actuator member and to move said valve means abruptly from said second to said first position under the influence of the biassing means.

2. A dispenser according to Claim 1, wherein the valve actuator means includes a resilient member, bistable in use.

3. A dispenser according to Claim 2, wherein the resilient member is in the form of a generally C-shaped or sinusoidal leaf spring.

4. A dispenser according to any preceding Claim, wherein the valve actuator means includes a bell crank lever adapted to act upon the valve means.

5. A dispenser according to Claim 4 when dependent upon Claim 2 or 3, wherein the valve actuator means includes an intermediate lever operatively connected to the actuator member so that axial movement of the actuator member causes rotation of the intermediate member, rotation of the intermediate member causing the bistable resilient member to flip from one position of stability to the other, and said flipping causing rotation of the bell crank lever to actuate the valve means.

6. A dispenser according to any preceding Claim, which includes an air admission valve for admitting air into the chamber.

7. A dispenser according to Claim 6 when dependent upon Claim 5, wherein rotation of the bell crank lever causes actuation of said air admission valve.

8. A dispenser according to any preceding Claim, wherein the valve means includes seal means for sealing respectively with the inlet of the chamber and the outlet of the chamber.

9. A dispenser according to any preceding Claim, wherein the valve actuator means is composed substantially of acetal resin.

0256874

FIG.3.

FIG.1.

FIG.2.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 127 779 (PATCO PRODUCTS) * Whole document * | 1-8 | B 67 D 3/02 G 01 F 11/32 |
| X | FR-A-2 158 388 (AUTIC DEVELOPMENTS) * Figures 1,2; claims * | 1-8 | |
| X | CH-A- 461 975 (AUTIC DEVELOPMENTS) * Figures 1,7; column 6, line 29 - column 7, line 55 * | 1-8 | |
| X | AU-A- 530 039 (BAYLY ASSOCIATES) * Figures 1-5; page 5, line 18 - page 7, line 33 * | 1,2 | |
| A | GB-A-2 170 780 (TRUMETER CO.) | | TECHNICAL FIELDS SEARCHED (Int. Cl.4) B 67 D G 01 F |

The present search report has been drawn up for all claims

| Place of search | Date of completion of the search | Examiner |
|---|---|---|
| THE HAGUE | 21-10-1987 | DEUTSCH J.P.M. |